# EUROPEAN PATENT APPLICATION

(11) **EP 3 086 439 A1**
(43) Date of publication of application: **26.10.2016**
(21) Application number: 15195738.8
(22) Date of filing: 20.11.2015
(51) Int. Cl.: H02J 9/06

(54) **CONNECTION FOR PERMANENT POWER SUPPLY OF ELECTRONIC UNITS IN A NETWORK DISCONNECTED FROM A SOURCE**

(30) Priority: 20.04.2015 CZ 20150263
(71) Applicant: Ceské vysoké ucení technické v Praze, 11000 Praha 1 (CZ)
(72) Inventor: JIROVSKY, Vaclav, 14300 Praha 4 (CZ)
(74) Representative: Kratochvil, Vaclav

(57) **Abstract**

The connection for permanent power supply of electronic units in a network disconnecting from the source solves cases when the distribution network is intermittently disconnected from the power supply source because the main - high-power - devices are out of order during a given time interval. For such cases, a connection is designed, which uses change-over to switch from the supply power source (1) to the extra low-voltage power supply source (2), supplying without interruption electronic units (8) connected through a converter (6) accepting a wide range of input voltages.

## Description

### Background of the Invention

The invention deals with a connection for permanent power supply of electronic units in a network disconnecting from the source and it solves a power supply system for permanent power supply of devices located in a distribution network that is not supplied permanently with prescribed power supply from a power supply source, such as public lighting distribution networks.

### Description of Prior Art

Power supply of the electronic unit devices in a distribution network where the connection to the power supply source is not permanent is currently solved by large accumulator stations. These are charged during the time when the distribution network is connected to the power supply source and they serve as the voltage source for the device - electronic unit - when the distribution network is disconnected from the power supply source. However, power demands of electronic units require mostly only tens of watts, and constantly repeated charging cycles result in the need for regular replacement of the accumulators, which increases operational costs. Another solution is to maintain the distribution networks under permanent power supply from the power supply source and to connect the high-power devices individually by means of remote control, which requires high investment as well as operational costs.

### Summary of the Invention

Disadvantages mentioned above are removed by the connection for permanent power supply of electronic units in a network disconnecting from the source according to the presented solution where a low-voltage power supply source is connected to the distribution network via an active contact of the contactor controlled by means of relay and on the take-off side is the supplied high-power device and the electronic unit. The principle of the new solution is that the output of the power supply source is also connected to the input of the extra low-voltage power supply source, while its output is connected to the normally closed contact of the contactor. The electronic unit is connected to the distribution network via the power supply source with wide-ranged input voltage. This wide range of input voltages is given by the output values of voltages of the power supply source and the extra low-voltage power supply source.

Often, multiple contactors are connected to the distribution network that are connected to common power supply source and are controlled by a single relay. In this case, at least one of such contactors is connected by its normally closed contact to the power supply source via the extra low-voltage power supply source. On the take-off side are usually multiple electronic units and then each of them is connected to the distribution network via its own power supply source with wide-ranged input voltage.

The advantage of the described connection is that compared to the present state of art it allows to achieve lower investment as well as operational costs.

### Explanation of Drawings

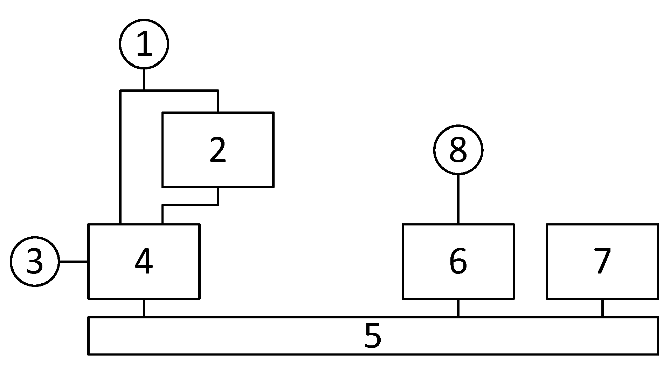

The example of the connection for permanent power supply of electronic units in a network disconnecting from the source according to the presented solution is shown by a block diagram in the attached drawing.

### Detailed Description of the Preferred Embodiments

Connection for permanent power supply of electronic units in a network disconnecting from the source is in closer detail shown in the attached drawing in the form of a block diagram. To the distribution network 5, via the active contact of the contactor 4 controlled by means of the relay 3, is connected the low-voltage power supply source 1; the low voltage is defined by standards as a voltage from 50 V to 1000 V. The output of the power supply source 1 is also connected to the extra low-voltage power supply source 2; the extra low-voltage is defined by standards as a voltage up to 50 V. Output of the extra low-voltage power supply source 2 is connected to the normally closed contact of the contactor 4. On the take-off side is the supplied high-power device 7 and the electronic unit 8. This electronic unit 8 is connected to the distribution network 5 via the power supply source with wide-ranged input voltage 6. The range of input voltages of the power supply source 6 is given by the output values of the power supply source 1 and the extra low-voltage power supply source 2.

If multiple contactors 4 are connected to the distribution network 5 and are connected to a single common power supply source 1 and controlled by means of a single relay 3, then the presented connection is applied at least for one contactor 4, which is by its normally closed contact connected to the power supply source 1 via the extra low-voltage power supply source 2. On the take-off side there are usually multiple electronic units 8 where each one of them is connected to the distribution network 5 via its own power supply source with wide-ranged input voltage 6.

Modification of the connection on the side of the low-voltage power supply source 1 lies in the addition of the extra low-voltage power supply source 2, which through the normally closed contact of the contactor 4 brings this extra low-voltage to the distribution network 5 during the time the distribution network 5 is disconnected from the power supply source 1. On the side of high-power devices connected to the distribution network 5 is located also the power supply source with wide-ranged input voltage and its output supplies the device - electronic unit.

A specific example of the invention application is the implementation of power supply of electronic units in the public lighting network where the power supply source 1 of the low-voltage of 230 V is at the switch-on point brought directly to the active contacts of contactors 4, which are controlled by means of the relay 3, and when the contactor 4 acts, the voltage from the power supply source 1 is brought via the active contacts of the contactor 4 to the distribution network 5. In parallel to this path is connected the extra low-voltage power supply source 2, its voltage is 24 V, which is supplied from the low-voltage power supply source 1 and provides extra low-voltage of such value that will not significantly affect the device connected to the distribution network 5, while its output is connected to the normally closed contacts of contactors 4. When the control relay 3 releases, movable contacts of contactors 4 shift to the normally closed position and connect to the distribution network 5 the extra low-voltage power supply source 2. On the take-off side, in parallel to the supplied high-power device 7, is connected the power supply source with wide-ranged input voltage 6, which adjusts the voltage brought via the distribution network 5 to the value required for the electronic unit 8.

### Industrial Applicability

Connection for permanent power supply of electronic units in a network disconnecting from the source can be used anywhere where the high-power distribution networks are installed that supply devices whose consumption decreases significantly with the magnitude of applied voltage and where it is necessary to install electronic units with low consumption demands. Examples may be the installations of devices in the environment monitoring stations or camera units on the public lighting masts.

## Claims

1. Connection for permanent power supply of electronic units in a network disconnecting from the source where to the distribution network (5), via the active contact of the contactor (4) controlled by means of the relay (3), is connected the low-voltage power supply source (1), and on the take-off side is the supplied high-power device (7) and the electronic unit (8) **characterized by the fact that** the power supply source (1) has its output connected also to the input of the extra low-voltage power supply source (2), the output of which is connected to the normally closed contact of the contactor (4), and the electronic unit (8) is connected to the distribution network (5) via the power supply source with wide-ranged input voltage (6), where this range of the input voltages is given by the output values of voltages of the power supply source (1) and the extra low-voltage power supply source (2).

2. Connection according to claim 1 **characterized by the fact that** to the distribution network (5) are connected multiple contactors (4) that are connected to a single power supply source (1) and controlled by a single relay (3), and at least one of these contactors (4) is connected by its normally closed contact to the power supply source (1) via the extra low-voltage power supply source (2), and the take-off side includes multiple electronic units (8), while each of them is connected to the distribution network (5) via its own power supply source with wide-ranged input voltage (6).
